# EUROPEAN PATENT APPLICATION

(11) **EP 3 744 971 A1**
(43) Date of publication of application: **02.12.2020**
(21) Application number: 19177310.0
(22) Date of filing: 29.05.2019
(51) Int. Cl.: F03B 17/06

(54) **WATER FLOW POWER GENERATOR**

(71) Applicant: Van Corstanje, Petrus Adrianus, 7955 PX Ijhorst (NL)
(72) Inventor: Van Corstanje, Petrus Adrianus, 7955 PX Ijhorst (NL)
(74) Representative: De Vries & Metman

(57) **Abstract**

A submersible turbine assembly (1) for conversion of kinetic energy of a water current to electric power. The turbine assembly comprises:
- a housing (3) having an inflow side (4) and a turbine side (5) opposite to the inflow side, the housing comprising a channel extending in a flow direction (F) from the inflow side to the turbine side, the channel converging in flow direction towards the turbine side;
- at least one turbine (9) arranged at the turbine side within the channel; and
- one or more buoyancy compartments.

## Description

The invention relates to a turbine assembly, in particular a submersible water-flow power generator. Such a generator is used under water to convert kinetic energy of a water current to electric power.

Water-flow generators have considerable advantages, particularly when compared to wind turbines and solar panels. The generators can be used on locations with water currents of a more or less steady and constant current force and flow direction. Such water currents are more stable than wind and do not produce gusts or blasts, extreme storms or wind stillness. This results in less downtime and avoids the need for expensive yawing and pitching systems, so water flow turbines are more robust and require less maintenance, which in turn results in considerably less costs for purchase, repair and maintenance. Submersible water-flow generators are used under water so they do not visually impact the landscape and they do not cause noise. Water-flow generators do not require the expensive foundations and pylons that wind turbines require. A further advantage is that the kinetic energy transfer from a water flow to a turbine is much more efficient than the energy transfer from an air flow to a wind turbine.

Solar parks take up a lot of surface and space, which could otherwise be used, e.g., for agriculture or nature development. The yield of a solar park varies with solar intensity. Submersible water flow turbines do not have these drawbacks.

In view of these advantages, submersible water flow turbines have been developed, such as the turbine disclosed in GB 25421533. This publication discloses a submersible power generating system moored to a weight body. The system comprises turbines driving a generator, a hollow tank to provide buoyance and a further buoyant body floating above the generator. Water passing the turbine tends to take the path of lowest resistance, and flow along side the turbine. Hence, efficiency of the energy conversion is low.

The object of the invention is to provide a submersible water flow power generator with improved conversion efficiency, and preferably improved stability.

The object of the invention is achieved with a swater-flow turbine assembly comprising:
- a housing having an inflow side and a turbine side opposite to the inflow side, the housing defining a channel extending in a flow direction from the inflow side to the turbine side, the channel converging in flow direction towards the turbine side;
- at least one turbine arranged within the channel at the turbine side of the housing; and
- one or more buoyancy compartments.

The converging channel causes a considerable pressure build-up at the turbine side, significantly improving efficiency of energy conversion by the turbines.

The assembly will typically have a mooring section with at least one mooring cable running from a point a the inflow side to an anchor. The mooring cables will typically be symmetrically arranged relative to a central axis of the assembly extending in flow direction. This allows the assembly to align itself with the direction of the water current passively by weathervaning. One or more power cables and/or supply lines for compressed air can run along the mooring lines to transfer the generated electricity to a power grid and associated facilities.

The turbine assembly may for example comprise a platform supporting the housing. The platform may comprise the buoyancy compartments. The mooring cables can be connected to the platform, e.g., at its bottom section.

In a specific embodiment, the turbine assembly may comprise a row of parallel floaters supporting the platform and extending parallel to the flow direction, each floater comprising at least one of said buoyancy compartments. The parallel floaters define channels which contribute to aligning the assembly with the flow direction of the water current and which help to stabilize the assemblies position and orientation. The floaters can be arranged to distribute the buoyancy force equally over the platform, so the platform maintains a substantially horizontal position.

The buoyancy compartment of a floater may for example extend in lengthwise direction of said floater, e.g., over its full length.

The buoyancy compartments can for example be filled with a buoyant solid material, such as a foamed polymeric material, e.g., foamed polystyrene, such as high density EPS with a density of at least 32 kg/m3, or polyurethane foam.

Optionally, one or more of the floaters can be provided with a stabilization compartment. Such a compartment may for example be formed by a separate chamber of the floater provided with water inlet openings. If the assembly is lowered into water, these stabilization compartments will fill automatically with water. If the assembly is lifted from the water, water will flow out of the chamber and the stabilization compartment will be emptied. In a specific embodiment the floaters may comprise two chambers extending along the length of the floater and separated by an inner wall of the floater. One chamber is filled with buoyant material to form the buoyancy compartment. The other chamber is provided with water inlet openings and forms the stabilization compartment. The stabilization compartment will typically be formed by a lower chamber, while the buoyancy compartment is formed by an upper chamber.

Optionally, the assembly may comprise one or more ballast tanks, which can selectively be filled with water or air to adjust the overall net buoyancy of the assembly. If the assembly needs maintenance, the ballast tanks can be connected to a supply of air to fill the compartments at least partly with air and remove water from the compartments. After completing the maintenance job, the compartments can be refilled with water to reduce the overall buoyancy, e.g., until the mass density of the assembly is close to the specific weight of water so the assembly can freely float and weathervane at a desired level under water. The filled ballast tanks substantially increase the stability of the assembly without increasing its weight such that the assembly could sink.

The ballast tanks can for example be positioned on the platform or the housing or below the platform. The total buoyancy of the assembly is determined jointly by the adjustable buoyancy of the ballast tanks and the permanent buoyancy of the buoyancy compartments. A symmetrical arrangement of the buoyancy compartments and the ballast tanks relative to a center point of the platform will result in a stable horizontal floating position of the assembly. In a specific embodiment, the assembly comprises a ballast tank at either side of the housing, e.g., at a top side of the platform, e.g., extending parallel to the flow direction.

In a specific embodiment, the turbine assembly may further comprise an array of turbines with rotors having rotor axes substantially parallel to the flow direction. The turbines may have impellers positioned in a matching passage in a rear wall of the housing. This isolates the individual impellers from any turbulence of adjacent turbines, so a relatively large number of closely packed turbines can be operated.

The housing, the platform, the floaters and other parts of the assembly can be made of a material which is resistant to the environment where the assembly is used. Where the assembly is used at offshore locations, the material should be sufficiently resistant to saltwater. The material may for example be an aluminium based alloy.

To protect the turbines from passing fish, seaweed, or floating objects, the housing may be provided with a grid or screen covering the inflow side. To guide the screened material away from the assembly, the grid may for example make an angle with a plane perpendicular to the flow direction. The grid can for example be concave, or tilted about a horizontal or vertical tilting axis. In a specific embodiment, the grid may comprise two parts forming a front section in a triangular outline in top view pointing away from the turbine side. Due to this arrangement, fish or dirt stopped by the grid, will drift aside. The grid may be dimensioned to let fish pass that are sufficiently small to survive passage of the used turbine impellers.

Optionally, the assembly can be stabilized by providing a ballast unit at a distance below its centre of gravity, e.g., at a distance below the floaters. Such a ballast unit can for example be a water ballast tank, optionally having an inlet for compressed air to adjust its buoyancy. Such a ballast unit helps to prevent tilting of the floating assembly.

The assembly is particularly useful for off shore locations where steady water currents occur. The assemblies can be suspended sufficiently below sea level so large ships can sail over the assemblies without damaging them.

The assemblies can be used to form a large energy yield park. Optionally, the assemblies can be combined with off shore wind turbines and/or solar cell parks.

The invention is further explained with reference to the accompanying drawings showing an exemplary embodiment.
Figure 1: shows a turbine assembly in perspective view;
Figure 2: shows the rear side of the assembly of Figure 1 in perspective view;
Figure 3A: shows the assembly of Figure 1 in front view;
Figure 3B: shows the assembly of Figure 1 in top view;
Figure 3C: shows the assembly of Figure 1 in rear view;

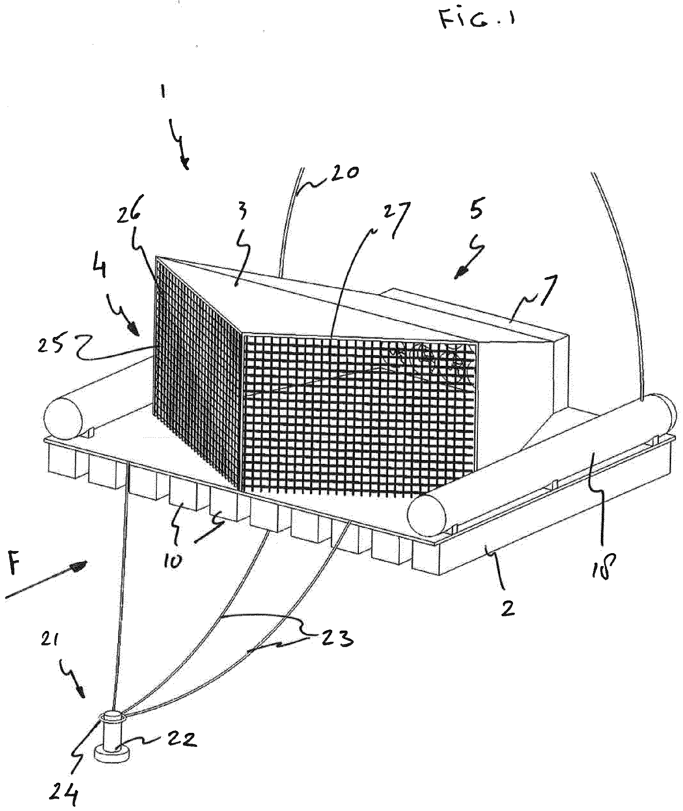

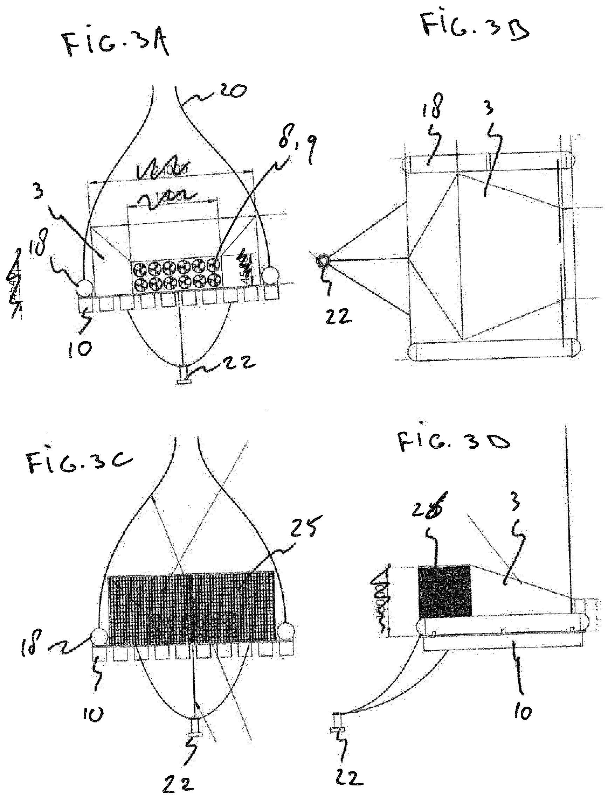

Figure 3C: shows the assembly of Figure 1 in side view;

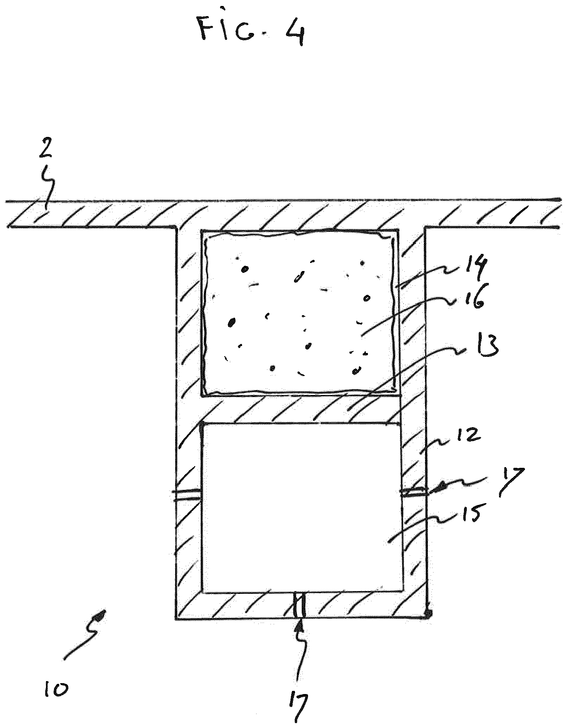

Figure 4: shows a cross-section of a buoyancy compartment of the assembly of Figure 1

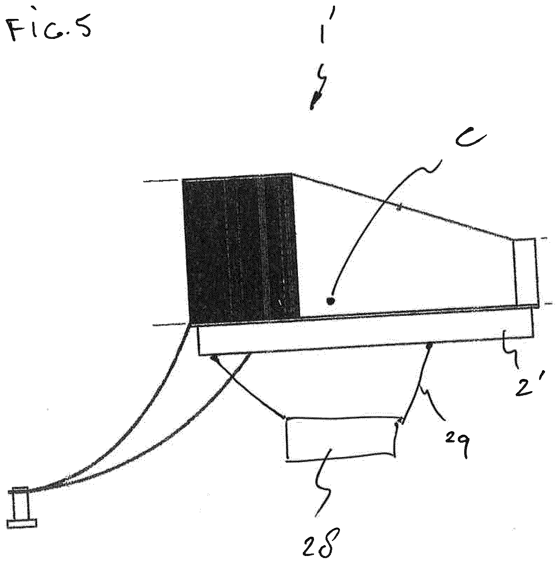

Figure 5: shows an alternative embodiment in side view.

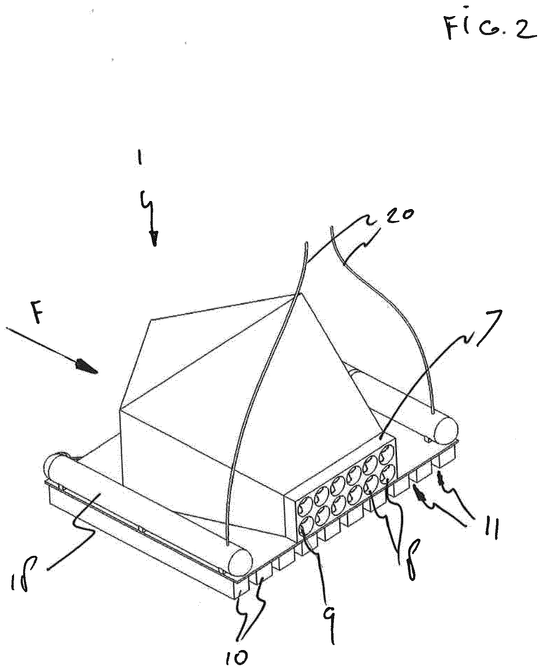

Figures 1 and 2 shows a turbine assembly 1 comprising a platform 2 and a housing 3 on the platform 2. The housing 3 has an inflow side 4 and a turbine side 5 opposite to the inflow side 4. The interior of the housing 3 defines a channel 6 extending in a flow direction F from the inflow side 4 to the turbine side 5. The channel 6 converges in flow direction towards the turbine side, e.g., with a factor 4 or more.

At its turbine side 5 the housing 3 has a rear wall 7 with an array of parallel openings 8 (see Figure 2). These openings form passages extending in the flow direction F. Each of these openings contains a turbine impeller 9 of a turbine for converting kinetic energy a passing water flow into electric energy. The impellers 9 have rotational axes coaxial with the longitudinal axes of the associated passage 8.

The platform 2 has a top side supporting the housing 3 and defining a bottom of the converging channel, and a lower side supported by a row of parallel floaters 10. These floaters 10 are regularly spaced, defining channels 11 between them, all extending in flow direction F.

Figure 4 shows one of the floaters 10 in cross section. The floater 10 has a rectangular outline defined by an outer wall 12. A cross wall 13 divides the interior of the floater 10 into an upper chamber 14 and a lower chamber 15, both extending along the full length of the floater 10.

The upper chamber 14 forms a buoyancy compartment and is filled with a buoyant material 16, such as foamed polymeric material, e.g., with a closed cell structure, such as high density EPS. The joint buoyancy of the floaters 10 is sufficient for the assembly 1 to float upward to water level.

The lower chamber 15 forms a stabilization compartment and is provided with a plurality of openings 17. When the assembly 1 is lowered into water, the stabilization compartment 15 will gradually fill with water. This contributes to stabilization of the position of the assembly 1 under water. When the assembly 1 is lifted out of the water, water in the stabilisation compartment will gradually flow out of the lower chamber 15 via the openings 17. This makes it possible to use a relatively light weight construction which is still sufficiently stabilized in an underwater position.

Optionally, the floaters 10 can be provided with a streamlined upstream end to reduce pressure exerted by the water current.

The platform 2 also carries a pair of parallel cylindrical ballast tanks 18, one ballast tank 18 at either side of the housing 3, both extending in flow direction F. The ballast tanks 18 have inlet ports 19 connected to a line 20 for the supply of pressurized air. The line 20 leads to a service boat. Via this line 20 air can be pumped into the ballast tank, forcing ballast water to flow out via a water outlet (not shown). This increases the buoyancy of the assembly 1. The buoyancy can be lowered by filling the ballast tanks 18 with water. When the ballast tanks 18 are fully filled with water the buoyancy of the assembly 1 is caused only by the floaters. The filled ballast tanks 18 contribute to further stabilization of the position of the assembly 1.

The assembly 1 also comprises a mooring section 21 with an anchor 22 and a set of cables 23 connecting to the assembly 1 in a symmetric arrangement relative to the flow direction. The anchor 22 is firmly anchored into the soil. The cables 23 are connected to the anchor 22 by a freely rotatable ring 24. This way, the assembly 1 can freely weathervane and align itself with the flow direction F of the water current. This automatic alignment is further supported and stabilized by the parallel channels 11 between the floaters 10. The filled water ballast tanks 18 increase the inertia of the assembly 1 which further adds to stabilization of the self-aligned position.

As a result the assembly 1 and the turbines 8 will always be aligned with the flow direction F of the water current. This significantly helps to optimize the turbine's conversion efficiency.

In order to prevent clogging or damaging of the turbines 9, the inflow side 4 of the assembly 1 is provided with a grid 25. In the shown embodiment the grid 25 comprises two symmetrically arranged grid halves 26, 27, making an angle with each other and both making an angle of more than 90 degrees with the flow direction F, measured upstream of the grid 25 in top view. The resulting triangular outline points away from the turbine side 5. Due to the grid's angle with the flow direction fish, seaweed, litter or other floating objects are guided sideward so the grid stays clear. In other embodiments, the grid may for example be tilted about a horizontal and/or vertical axis to deviate from a perpendicular position relative to the flow direction F. In a further embodiment, the grid can be convex.

The turbine impellers 9 can form a generator rotor cooperative with a stator integral within the rear wall 7. Generated electricity is collected via cables (not shown), e.g. at the mooring section, and transported to a power grid.

The assembly 1 can have any suitable scale. Its width can for instance be as large as 20 - 30 meters or even larger or smaller if so desired.

Figure 5 shows a further possible embodiment. In this embodiment the turbine assembly 1' is provided with a ballast unit 28 at a distance below the assembly's centre of gravity C. The ballast unit 28 comprises a tank filled with ballast water suspended from the platform 2' by a number of cables 29. The ballast unit 28 helps to stabilize the horizontal position of the assembly 1' and to prevent tilting. Optionally, one or more lines for the supply of compressed air can be connected to the tank 28, leading to a source of compressed air, e.g., on a service boat.

It is noted that the drawings are schematic and not necessarily to scale. The disclosure is not restricted to the above described embodiments which can be varied in a number of ways within the scope of the claims.

## Claims

1. A turbine assembly (1) comprising:
- a housing (3) having an inflow side (4) and a turbine side (5) opposite to the inflow side, the housing comprising a channel extending in a flow direction (F) from the inflow side to the turbine side, the channel converging in flow direction towards the turbine side;
- at least one turbine (9) arranged at the turbine side within the channel; and
- one or more buoyancy compartments.

2. Turbine assembly according to claim 1, comprising a mooring section (21) with an anchor (22) and one or more cables (23 connecting to the assembly in a symmetric arrangement relative to the flow direction.

3. Turbine assembly according to claim 1 or 2, comprising a platform (2) supporting the housing (3) and comprising the buoyancy compartments.

4. Turbine assembly according to claim 3, further comprising a row of parallel floaters (10) supporting the platform (2) and extending parallel to the flow direction (F), each floater comprising at least one of said buoyancy compartments.

5. Turbine assembly according to claim 4, wherein the buoyancy compartment of a floater (10) extend in lengthwise direction of said floater, e.g., over its full length.

6. Turbine assembly according to any one of the preceding claims, wherein at least one of the buoyancy compartments (14) is filled with a buoyant solid material (16), such as a foamed polymeric material, such as high density EPS.

7. Turbine assembly according to claim 4, 5 or 6, wherein the floaters (10) further comprise a stabilization compartment (15) formed by a chamber comprising water inlets.

8. Turbine assembly according to claim 7, wherein the floaters (10) comprises an upper chamber (14) and a lower chamber (15), both extending over the length of the floater, wherein the upper chamber forms the buoyancy compartment and the lower chamber forms the stabilization compartment.

9. Turbine assembly according to any one of the preceding claims, comprising a ballast tank (18) at either side of the housing (3), e.g., at a top side of the platform (2), e.g., extending parallel to the flow direction.

10. Turbine assembly according to any one of the preceding claims, further comprising an array of turbines (9) with rotor axes parallel to the flow direction (F).

11. Turbine assembly according to claim 10, the housing (3) comprising a wall (7) at the turbine side with flow-through passages (8) holding at least an impeller of an associated turbine (9).

12. Turbine assembly according to any one of the preceding claims, comprising a grid (25) covering the inflow side (4) .

13. Turbine assembly according to claim 12, the grid (25) making an angle with a plane perpendicular to the flow direction (F).

14. Turbine assembly according to claim 13, wherein the grid (25) comprises two parts (26, 27) forming a front section in a triangular outline in top view pointing away from the turbine side (5).

15. Turbine assembly according to any one of the preceding claims, further comprising a ballast unit (28) at a distance below its centre of gravity (C).
